# EUROPÄISCHE PATENTSCHRIFT

(11) **EP 2 673 218 B1**
(45) Veröffentlichungstag und Bekanntmachung des Hinweises auf die Patenterteilung: **21.12.2016**
(21) Anmeldenummer: 12712540.9
(22) Anmeldetag: 07.02.2012
(51) Int. Cl.: B65G 1/04

(54) **REGALLAGERSYSTEM**
RACK STORE SYSTEM
SYSTÈME D'ENTREPÔT À RAYONNAGES

(30) Priorität: 08.02.2011 AT 1652011; 08.07.2011 AT 10042011
(43) Veröffentlichungstag der Anmeldung: 18.12.2013
(73) Patentinhaber: TGW Mechanics GmbH, 4600 Wels (AT)
(72) Erfinder: WOLKERSTORFER, Christoph, A-4600 Wels (AT); ANGLEITNER, Karl, A-4600 Wels (AT)
(74) Vertreter: Burger, Hannes
(86) Internationale Anmeldenummer: PCT/AT2012/050017
(87) Internationale Veröffentlichungsnummer: WO 2012/106745

(56) Entgegenhaltungen:
- DE-U1-202009 012 490
- FR-A1- 2 710 330

## Beschreibung

Die Erfindung betrifft ein Regallagersystem mit einem Regallager mit benachbart zueinander angeordneten Lagerregalen, zwischen denen sich zumindest eine Regalgasse von einer ersten Regallagerseite zu einer zweiten Regallagerseite erstreckt und welche in übereinander liegenden Regalebenen Stellplätze für Ladegüter aufweisen, und jeweils in den Regalebenen entlang der Regalgasse parallel zueinander verlaufenden Führungsschienen und zumindest einem entlang der Führungsschienen verfahrbaren, autonomen Förderfahrzeug zum Transport der Ladegüter zu den Stellplätzen und einer auf mindestens einer der Regallagerseiten angeordneten Förderfahrzeug-Hebevorrichtung zum Transport des Förderfahrzeuges zumindest zwischen den Regalebenen, welche Förderfahrzeug-Hebevorrichtung eine eigenständige mechanische und elektrische Baueinheit bildet und einen sich zumindest zwischen der untersten Regalebene und obersten Regalebene erstreckenden Führungsrahmen und eine an diesem relativ zu den Lagerregalen vertikal bewegbare Aufnahmevorrichtung für das Förderfahrzeug umfasst, wobei die Aufnahmevorrichtung über einen Hubrahmen mit Führungsorganen am Führungsrahmen gelagert ist und in einer Richtung parallel zur Regalgasse verlaufende Führungsschienen umfasst, wobei die Förderfahrzeug-Hebevorrichtung derart der Regalgasse vorgelagert ist, dass die Führungsschienen der Aufnahmevorrichtung in der Verlängerung zu den Führungsschienen der Regalgasse verlaufen, wenn die Aufnahmevorrichtung in der jeweiligen Regalebene vor der Regalgasse positioniert wird.

Ein solches Regallagersystem ist bereits aus der DE 20 2009 012 490 U1 bekannt.

Die DE 2 113 202 A1, EP 1 716 060 B1 und DE 10 2009 032 406 A1 offenbaren Regallagersysteme, bei denen auf der ersten Regallagerseite eine Ladegut-Hebevorrichtung zum Transport von Ladegütern zwischen den Regalebenen und auf der zweiten Regallagerseite eine Förderfahrzeug-Hebevorrichtung zum Transport des Förderfahrzeuges zwischen den Regalebenen angeordnet ist. Während nach der DE 2 113 202 A1 und EP 1 716 060 B1 die Förderfahrzeug-Hebevorrichtung stationär vor der Regalgasse angeordnet ist, kann nach der Ausführung gemäß der DE 10 2009 032 406 A1 die Förderfahrzeug-Hebevorrichtung entlang der zweiten Regallagerseite verfahren und ein Förderfahrzeug zwischen Regalgassen umsetzen. Aus der FR 2 710 330 A1 ist ein Regallagersystem bekannt, welches ein Regallager mit benachbart zueinander angeordneten Lagerregalen und in übereinander liegenden Regalebenen entlang von Regalgassen zwischen den Lagerregalen verlaufenden ersten Führungsbahnen für ein Förderfahrzeug zum Transport der Ladegüter, eine Förderfahrzeug-Hebevorrichtung zum Transport des Förderfahrzeuges zwischen den Regalebenen sowie Ladegut-Hebevorrichtungen umfasst. Die ersten Führungsbahnen sind in jeder Regalebene mit senkrecht zwischen den Regalgassen verlaufenden zweiten Führungsbahnen verbunden. Die Förderfahrzeug-Hebevorrichtung bildet eine eigenständige mechanische und elektrische Baueinheit, welche zwischen den Ladegut-Hebevorrichtungen angeordnet und über parallel zu den Regalgassen verlaufende dritte Führungsbahnen in jeder Regalebene an die zweiten Führungsbahnen angeschlossen ist. Die Förderfahrzeug-Hebevorrichtung ist in der Verlängerung der Lagerregale versetzt zu den Regalgassen angeordnet.

Der Erfindung liegt die Aufgabe zugrunde ein Regallagersystem vorzusehen, das sich gegenüber den bekannten Regallagersystemen noch effizienter betreiben lässt.

Die Aufgabe der Erfindung wird dadurch gelöst, dass die Förderfahrzeug-Hebevorrichtung mit dem Führungsrahmen über Verbindungselemente in zumindest einigen der Regalebenen, bevorzugt in jeder Regalebene mit den Führungsschienen verbunden ist.

Dabei ist es von Vorteil, dass die am Regallager an einer der Regallagerseiten, insbesondere den Regalstehern mit Enden vorkragenden Führungsschienen eine einfache Anbindung der Förderfahrzeug-Hebevorrichtung, welche eine eigenständige Baueinheit bildet und damit in vorteilhafter Weise einen modularen Aufbau des Regallagersystems ermöglicht, am Regallager erlauben und außerdem eine übermäßige Biegebeanspruchung während der Überfahrt des Förderfahrzeuges zwischen der Aufnahmevorrichtung und Regalgasse, einerseits auf die Führungsschienen des Regallagers und andererseits auf den Führungsrahmen, insbesondere die vertikalen Rahmenteile vermieden wird. Somit kann das Förderfahrzeug über weite Wege mit hoher Fahrgeschwindigkeit verfahren werden, was sich positiv auf die Umschlagleistung im Regallagersystem auswirkt. Auch wird eine hohe Verfügbarkeit erreicht, da durch die verbesserte konstruktive Gestaltung der Anbindung der Förderfahrzeug-Hebevorrichtung der Abstandsspalt zwischen den einander zugewandten Stirnkanten der Führungsschienen der Aufnahmevorrichtung und der Führungsschienen des Regallagers auf ein Minimum (weniger als 10 mm) reduziert werden kann und damit die Überfahrt des Förderfahrzeuges zwischen der Aufnahmevorrichtung und der Regalgasse "stoßfrei" erfolgt. Dadurch sinkt der Wartungsaufwand am Förderfahrzeug.

Vorteilhafte Ausgestaltungen und Weiterbildungen der Erfindung ergeben sich aus den Unteransprüchen sowie aus der Beschreibung in Zusammenschau mit den Figuren.

Der Führungsrahmen umfasst vertikale Rahmenteile, welche beidseitig seitlich zur Regalgasse angeordnet sind. Dadurch kann ein Förderfahrzeug ungehindert in der jeweiligen Regalebene zwischen die Rahmenteile von der Aufnahmevorrichtung auf die Regalgasse und umgekehrt hindurchbewegt werden. Auch wird eine optimale Zugangsmöglichkeit in die Regalgasse ermöglicht, wenn Wartungsarbeiten im Regallager erforderlich sind. Die Führungsschienen der Aufnahmevorrichtung verlaufen parallel in Längsrichtung der Regalgasse, daher in Verlängerung zu den Führungsschienen der Regalgasse, wenn die Aufnahmevorrichtung in der jeweiligen Regalebene vor der Regalgasse positioniert wird.

Günstig ist es, wenn der Führungsrahmen vertikale Rahmenteile, eine diese am unteren Ende miteinander verbindende untere Traverse und eine diese am oberen Ende miteinander verbindende obere Traverse umfasst. Auf diese Weise, wird ein formstabiler und verwindungssteifer Führungsrahmen mit leichtem Gesamtgewicht geschaffen.

Bilden die vertikalen Rahmenteile außerdem jeweils Führungsbahnen für die Führungsorgane, insbesondere Führungsräder, des Hubrahmens aus, können vom Führungsrahmen getrennt angeordnete Führungssysteme entfallen, was eine erhebliche Vereinfachung der Konstruktion der Förderfahrzeug-Hebevorrichtung ermöglicht.

Vorteilhaft ist es, wenn die vertikalen Rahmenteile jeweils getrennt von den Führungsbahnen in einem Rasterabstand angeordnete Befestigungsmittel zur Montage der Führungsbahnen ausbilden. Auf diese Weise wird eine hohe Führungsgenauigkeit für den Hubrahmen bzw. die Aufnahmevorrichtung relativ zum Führungsrahmen erreicht und damit sichergestellt, dass der Abstandsspalt zwischen den einander zugewandten Stirnkanten der Führungsschienen der Aufnahmevorrichtung und der Führungsschienen des Regallagers möglichst klein gestaltet werden kann. Außerdem können die Befestigungsmittel in einem beliebigen Rasterabstand vorgesehen werden, beispielsweise als Lochreihe, was die Flexibilität in der Wahl von Montagebereichen auf unterschiedlichen Höhenniveaus erhöht.

In einer vorteilhaften Ausgestaltung der Erfindung sind die Führungsschienen zusätzlich jeweils mit Regalstehern und mit ihren der Förderfahrzeug-Hebevorrichtung benachbarten sowie an den Regalstehern vorragenden Enden mit den vertikalen Rahmenteilen des Führungsrahmens verbunden. Auf diese Weise wird zusätzlich eine Reduzierung der Biegebeanspruchung auf die Führungsschienen des Regallagers erreicht. Zudem wird die Führungsgenauigkeit des Förderfahrzeuges relativ zu den Führungsschienen verbessert, sodass die Überfahrt des Förderfahrzeuges zwischen den Führungsschienen der Aufnahmevorrichtung und den Führungsschienen der Regalgasse mit maximaler Fahrgeschwindigkeit erfolgen kann, was eine weitere Steigerung der Umschlagleistung im Regallagersystem ermöglicht.

Ist in Montagebereichen jeweils zwischen den vertikalen Rahmenteilen und den Führungsschienen jeweils eine Distanzplatte angeordnet, wird ein ausreichender Abstandsspalt zwischen den vertikal beweglichen Führungsschienen der Aufnahmevorrichtung und den Rahmenteilen geschaffen und selbst bei einer Biegebeanspruchungen auf die Rahmenteile in senkrechter Richtung auf die Verbindungsebenen zwischen dem jeweiligen Rahmenteil und der jeweiligen Führungsschiene eine kollisionsfreie Hubbewegung der Aufnahmevorrichtung relativ zum Hubrahmen erreicht.

Eine Optimierung des Kraftflusses in den Montagebereichen wird erreicht, wenn in den Montagebereichen jeweils zwischen den vertikalen Rahmenteilen und den Führungsschienen zur Befestigung der Führungsschienen an den Rahmenteilen jeweils eine Montageplatte vorgesehen ist.

Zum besseren Verständnis der Erfindung wird diese anhand der nachfolgenden Figuren näher erläutert.

Es zeigen jeweils in stark schematisch vereinfachter Darstellung:
- Fig. 1: eine erste Ausführung eines Regallagersystems mit einer Detailansicht auf die erste Regallagerseite, in perspektivischer Ansicht;
- Fig. 2: einen Ausschnitt des Regallagersystems nach Fig. 1 mit einer Detailansicht auf die zweite Regallagerseite, in perspektivischer Ansicht;
- Fig. 3: ein Ausführungsbeispiel für ein Förderfahrzeug des Regallagersystems nach Fig. 1, in perspektivischer Ansicht;
- Fig. 4: die Fahrzeug-Hebevorrichtung und einen Abschnitt des Regallagers, in perspektivischer Ansicht;
- Fig. 5: eine Führungsschiene des Regallagers und eine Montagevorrichtung, in perspektivischer Ansicht;
- Fig. 6: eine Draufsicht auf eine der Regalebenen und die Montagebereiche zwischen den Fahrschienen des Regallagers und der vertikalen Rahmenteile der Fahrzeug-Hebevorrichtung;
- Fig. 7: eine Draufsicht auf Fahrschienen des Regallagers und der Aufnahmevorrichtung mit speziell gestalteten Stirnkanten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

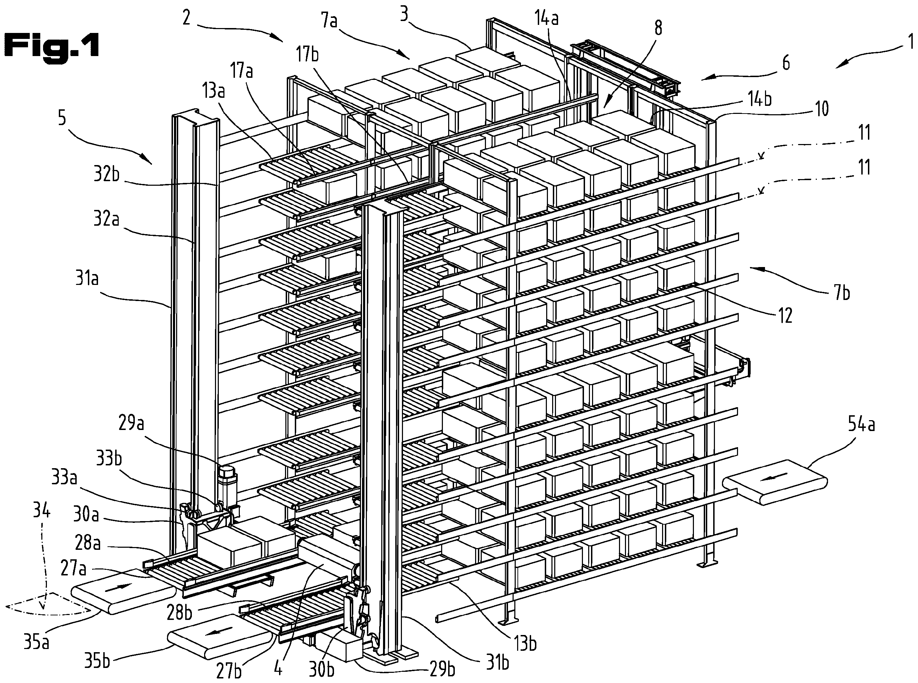

In den Fig. 1 bis 7 ist ein Regallagersystem 1 gezeigt, welches ein Regallager 2 für Ladegüter 3, zumindest ein selbstfahrendes Förderfahrzeug 4, eine Ladegut-Hebevorrichtung 5 und eine Förderfahrzeug-Hebevorrichtung 6 umfasst. Das Regallager 2 weist in einem Abstand parallel angeordnete Lagerregale 7a, 7b auf, zwischen denen sich eine Regalgasse 8 ausgehend von einer ersten Regallagerseite 9 zu einer zweiten Regallagerseite 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 7a, 7b in den Regalebenen 11 jeweils nebeneinander und hintereinander vorgesehene Stellplätze 12 für die Ladegüter 3 aus, sodass in Tiefenrichtung der Lagerregale 7a, 7b zwei Ladegüter 3 abgestellt werden können, daher eine so genannte "doppelttiefe" Lagerung möglich ist. Andererseits ist es auch möglich, dass die Lagerregale 7a, 7b in den Regalebenen 11 jeweils ausschließlich in einer Reihe nebeneinander vorgesehene Stellplätze 12 für die Ladegüter 3 ausbilden, sodass in Tiefenrichtung der Lagerregale 7a, 7b nur ein Ladegut 3 abgestellt werden kann, daher eine so genannte "einfachtiefe" Lagerung möglich ist.

Wie in Fig. 1 ersichtlich, kann das Regallagersystem 1 auf der ersten Regallagerseite 9 zusätzlich eine Pufferzone umfassen, die jeweils den Regalebenen 11 der Lagerregale 7a, 7b vorgelagert in einer Reihe Pufferplätze 13a, 13b für zumindest ein Ladegut 3 aufweist. Die Pufferplätze 13a, 13b sind jeweils auf einer antreibbaren Förderbahn, beispielsweise einer Transportvorrichtung, wie Staurollenbahn, Staugurtförderer und dgl. gebildet, dessen Förderrichtung parallel zur Regalgasse 8 verläuft.

In jeder Regalebene 11 erstrecken sich entlang der Regalgasse 8 zumindest von der ersten Regallagerseite 9 bis über die zweite Regallagerseite 10 hinweg erste Führungsschienen 14a, 14b, entlang deren das Förderfahrzeug 4 (Shuttle) geführt bewegbar ist, um Ladegüter 3, wie beispielsweise Behälter, Kartonagen, Tablare und dgl. zu den in den Regalebenen 11 der Lagerregale 7a, 7b jeweils vorgesehenen Stellplätzen 12 anzutransportieren und von den in den Regalebenen 11 der Lagerregale 7a, 7b jeweils vorgesehenen Stellplätzen 12 abzutransportieren.

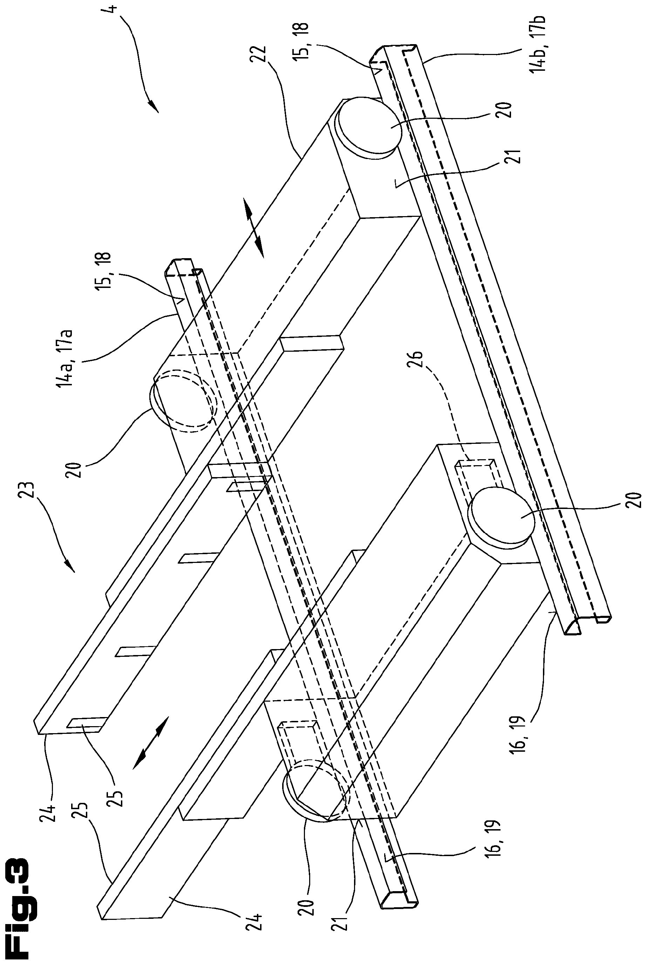

Die horizontalen ersten Führungsschienen 14a, 14b sind in den Regalebenen 11 jeweils an den Lagerregalen 7a, 7b befestigt und bilden je eine Höhenführungsbahn 15 und je eine Seitenführungsbahn 16 aus (Fig. 3).

Sind die Pufferplätze 13a, 13b vor jedem Lagerregal 7a, 7b zu beiden Seiten der Regalgasse 8 vorgesehen, sind auch in der ersten Vorzone des Regallagers 2 in jeder Regalebene 11 unmittelbar in der Verlängerung der ersten Führungsschienen im Regallager 2 zweite Führungsschienen 17a, 17b vorgesehen, sodass das Förderfahrzeug 4 (Shuttle) auch zwischen den, auf Höhe der Regalebenen 11 einander gegenüberliegenden Pufferplätzen 13a, 13b geführt bewegbar ist, um Ladegüter 3 zu den in den Regalebenen 11 der Lagerregale 7a, 7b jeweils vorgesehenen Pufferplätzen 13a, 13b anzutransportieren und von den in den Regalebenen 11 der Lagerregale 7a, 7b jeweils vorgesehenen Pufferplätzen 13a, 13b abzutransportieren.

Die zweiten Führungsschienen 17a, 17b sind in den Regalebenen 11 jeweils an den Transportvorrichtungen in der Pufferzone befestigt und bilden je eine Höhenführungsbahn 18 und je eine Seitenführungsbahn 19 aus (Fig. 3).

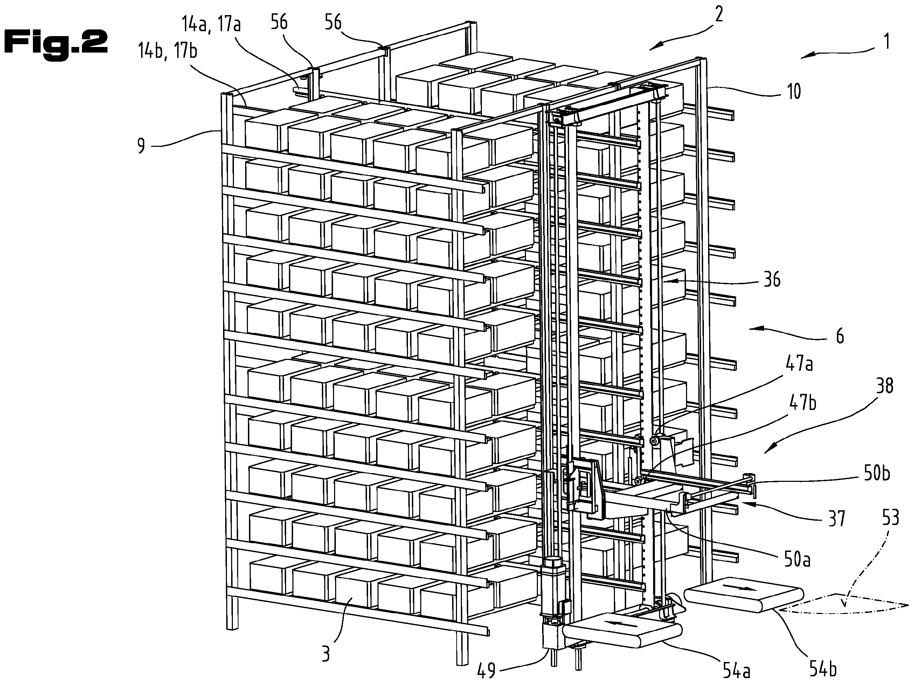

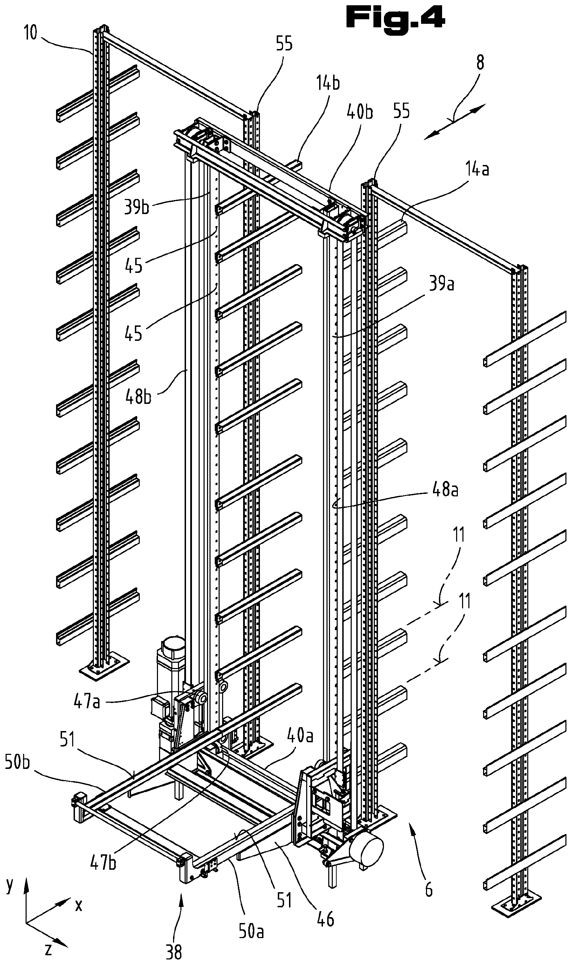

Die Führungsschienen 14a, 14b; 17a, 17b sind beispielsweise U-Profile, C-Profile und dgl. Das Förderfahrzeug 4, wie es in Fig. 3 näher dargestellt ist, weist Antriebsräder 20 auf und kann entlang der Höhenführungsbahnen 15, 18 rollend bewegt werden. Zur Seitenführung des Förderfahrzeuges 4, ist dieses mit Seitenführungsorganen 21 versehen. Beispielsweise sind die Seitenführungsorgane 21 durch am Gehäuserahmen 22 des Förderfahrzeuges 4 ausgebildete parallele Führungsanschlagflächen gebildet, welche zwischen den Seitenführungsbahnen 16, 19 der Führungsschienen 14a, 14b; 17a, 17b positionierbar sind. Das Förderfahrzeug 4 ist ferner mit einer Lastaufnahmevorrichtung 23 zur Einlagerung/Auslagerung/Umlagerung von einem oder gleichzeitig zwei Ladegütern 3 ausgestattet, welche nach gezeigter Ausführung durch in z-Richtung Teleskoparme 24 und jeweils an diesen angeordnete Mitnehmer 25 umfasst. Eine solche Lastaufnahmevorrichtung 23 ist beispielsweise aus der US 2005/0095095 A1 oder EP 0 647 575 A1 bekannt, und kann aufgrund der kompakten Bauweise der Teleskoparme 24 und der zuverlässigen Funktionsweise mit Vorteil eingesetzt werden. In einer vorteilhaften Ausführung kann das Förderfahrzeug 4 mit einer Feststellvorrichtung 26 ausgestattet werden. Die Feststellvorrichtung ist vorzugsweise durch eine elektromagnetische oder elektromechanische Haltebremse gebildet, welche das Förderfahrzeug 4 umfasst. Beispielsweise kann der Antriebsmotor des Fahrantriebes vom Förderfahrzeug 4 die Haltebremse ausbilden. Dadurch kann das Förderfahrzeug 4 in seiner Aufnahmeposition auf den dritten Fahrschienen 50a, 50b (Fig. 4) gesichert gehalten bzw. arretiert werden, sodass auch bei sehr dynamischen Verstellbewegungen der Aufnahmevorrichtung (Fig. 2, 3) keine Gefahr besteht, dass sich das Förderfahrzeug 4 aus seiner gesicherten Aufnahmeposition wegbewegt.

Auf der ersten Regallagerseite 9 ist stirnseitig vor dem Regallager 2 die Ladegut-Hebevorrichtung 5 angeordnet, welche nach gezeigter Ausführung unabhängig voneinander heb- und senkbare Aufnahmevorrichtungen 27a, 27b für Stückgüter 3 aufweist.

Die Aufnahmevorrichtungen 27a, 27b umfassen jeweils eine Transportvorrichtung 28a, 28b mit einer sich parallel zur Regalgasse 8 erstreckenden Förderrichtung, wobei die erste Transportvorrichtung 28a auf einem über einen ersten Hubantrieb 29a vertikal verstellbaren Hubrahmen 30a und eine zweite Transportvorrichtung 28b auf einem über einen zweiten Hubantrieb 29b vertikal verstellbaren Hubrahmen 30b aufgebaut sind.

Nach gezeigter Ausführung ist die erste Transportvorrichtung 28a über den Hubrahmen 30a auf einem ersten Mast 31 a und die zweite Transportvorrichtung 28b über den Hubrahmen 30b auf einem zweiten Mast 31b gelagert. Der Mast 31a, 31b ist mit Führungen 32a, 32b versehen, auf welchen die Hubrahmen 30a, 30b mit Führungsrädern 33a, 33b abrollbar aufliegen.

Die Transportvorrichtungen 28a, 28b sind unabhängig (entkoppelt) voneinander zwischen den Regalebenen 11 und auf das Höhenniveau einer jeden Regalebene 11 sowie auf das Höhenniveau einer Fördertechnikebene 34 verstellbar, sodass Ladegüter 3, wie beispielsweise Behälter, Kartonagen, Tablare und dgl., zwischen den Transportvorrichtungen 28a, 28b und Pufferplätzen 13a, 13b sowie zwischen den Transportvorrichtungen 24a, 24b und einer ersten Vorzonen-Fördertechnik gefördert werden können. Vorzugsweise sind die Transportvorrichtungen 28a, 28b jeweils durch eine antreibbare Förderbahn, wie eine Staurollenbahn, Staugurtförderer und dgl. gebildet. Es erweist sich auch von Vorteil, wenn die Transportvorrichtungen 28a, 28b in Förderrichtung hintereinander mehrere Ladegüter 3, vorzugsweise bis zu vier Ladegüter 3 aufnehmen können.

Die erste Vorzonen-Fördertechnik schließt an die Ladegut-Hebevorrichtung 5 an und umfasst eine erste Fördervorrichtung 35a und eine zweite Fördervorrichtung 35b, welche mit gegenseitigem Abstand parallel zueinander verlaufen.

Auf der zweiten Regallagerseite 10 ist stirnseitig vor dem Regallager 2 die Förderfahrzeug-Hebevorrichtung 6 (Umsetzvorrichtung) angeordnet. Die Förderfahrzeug-Hebevorrichtung 6 umfasst einen Führungsrahmen 36, einen Hubrahmen 37 und eine heb- und senkbare Aufnahmevorrichtung 38 für das Förderfahrzeug 4 (Fig. 3).

Der Führungsrahmen 36, wie in Fig. 4 näher ersichtlich, weist zu beiden Seiten der Regalgasse 8 angeordnete, vertikale Rahmenteile 39a, 39b, eine diese miteinander verbindende und unterhalb der untersten Regalebene 11 verlaufende untere Traverse 40a sowie eine diese miteinander verbindende und oberhalb der obersten Regalebene 11 verlaufende obere Traverse 40b. Die Rahmenteile 39a, 39b sind erste Formprofile, beispielsweise U-Profile, C-Profile oder in sich geschlossene Rohrprofile mit im Wesentlichen rechteckigem oder trapezförmigem Querschnitt. Die Traversen 40a, 40b sind durch mit gegenseitigem Abstand quer zur Regalgasse 8 verlaufende zweite Formprofile, beispielsweise U-Profile, C-Profile oder in sich geschlossene Rohrprofile mit im Wesentlichen rechteckigem oder trapezförmigem Querschnitt gebildet. Der Abstand ist so gewählt, dass zwischen den einander zugewandten Seitenflächen der zweiten Formprofile der Traversen 40a, 40b die ersten Formprofile der Rahmenteile 39a, 39b aufgenommen werden können.

Die Rahmenteile 39a, 39b bzw. ersten Formprofile und die Traversen 40a, 40b bzw. zweiten Formprofile sind über Verbindungselemente entweder lösbar oder über Fügeverbindungen dauerhaft zum formstabilen, verwindungssteifen Führungsrahmen 36 verbunden. Die Verbindungselemente sind nach gezeigter Ausführung durch Schrauben gebildet. Die Fügeverbindungen können aber auch durch Schweiß-, Löt- oder Klebenähte oder durch Druckfügen (Clinchen) oder Nietverbindungen hergestellt sein.

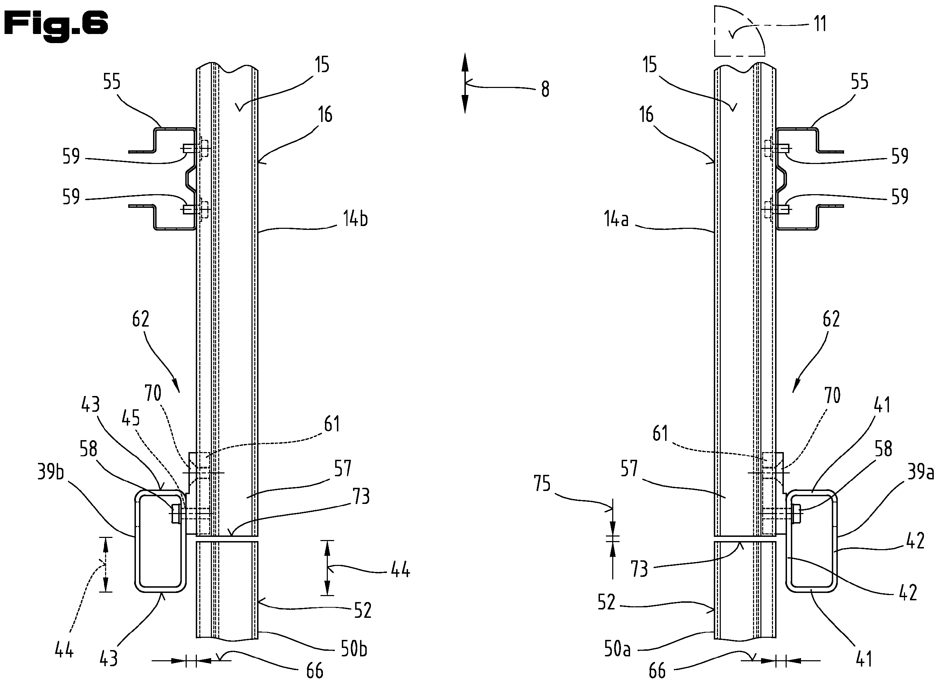

Wie in den Fig. 4 und 6 ersichtlich, bilden die Rahmenteile 39a, 39b jeweils sowohl einen Hubführungsabschnitt für den Hubrahmen 37 als auch einen Anbindungsabschnitt für die Befestigung der Führungsschienen 14a, 14b des Regallagers 2 aus.

Sind die Rahmenteile 39a, 39b jeweils ein geschlossenes Rohrprofil mit im Wesentlichen rechteckigem Querschnitt, umfassen diese mit gegenseitigem Abstand parallel verlaufende erste Profilwände 41 und diese verbindende zweite Profilwände 42. Der Hubführungsabschnitt ist durch in Richtung der Längserstreckung am jeweiligen Rahmenteil 39a, 39b verlaufende (drei) Führungsbahnen 43, 44 gebildet, wobei die ersten Profilwände 41 in zueinander parallelen Ebenen verlaufende, erste Laufflächen und die zweite Profilwand 42 eine zweite Laufflächen aufweisen. Die Führungsbahnen 43 bzw. Laufflächen schließen mit der Führungsbahn 44 bzw. Lauffläche einen Winkel von 90° ein, wobei an den Laufflächen Laufräder (Fig. 4) des Hubrahmens 37 abrollbar anliegen.

Sind die Rahmenteile 39a, 39b jeweils ein (nicht dargestelltes) C-förmig gestaltetes Führungsprofil, umfassen diese mit gegenseitigem Abstand parallel verlaufende erste Profilwände 41 und ausschließlich eine diese verbindende zweite Profilwand 42, wobei die zweite Profilwand 42 der Regalgasse 8 benachbart ist und die zweite Lauffläche ausbildet.

Der Anbindungsabschnitt zur Befestigung der Führungsschienen 14a, 14b des Regallagers 2 ist durch in Richtung der Längserstreckung am jeweiligen Rahmenteil 39a, 39b in einem Rasterabstand angeordnete Befestigungsmittel 45 gebildet. Die Befestigungsmittel 45 sind beispielsweise durch Befestigungsöffnungen, Befestigungszungen, Befestigungsbolzen und dgl. gebildet. Somit sind die Führungsbahnen 43, 44 des Hubführungsabschnittes und der Anbindungsabschnitt räumlich voneinander getrennt an der ersten Profilwand 41 und/oder zweiten Profilwand 42 vorgesehen.

Die Führungsbahn 44 ist nach gezeigter Ausführung an der zur Regalgasse 8 zugewandten zweiten Profilwand 42 vorgesehen. Auch ist es möglich, dass die Führungsbahn 44 an der von der Regalgasse 8 abgewandten Profilwand 42, wie in Fig. 6 in strichlierten Linien eingetragen, vorgesehen ist. Somit ist die Führungsbahn 44 an der zur Regalgasse 8 entfernten zweiten Profilwand 42 und der Anbindungsabschnitt an der zur Regalgasse 8 benachbarten zweiten Profilwand 42 vorgesehen.

Der Hubrahmen 37 umfasst ein Aufnahmegestell 46 und an diesem gelagerte Führungsorgane 47a, 47b, mit welchen sich der Hubrahmen 37 auf den Führungsbahnen 43, 44 abstützt. Bevorzugt sind die Führungsorgane 47a, 47b durch Führungsräder gebildet, an den Führungsbahnen 43, 44 abrollbar aufliegen.

Der Hubrahmen 37 ist mit einer Verstellvorrichtung gekoppelt, welche nach gezeigtem Ausführungsbeispiel am Führungsrahmen 36 gelagerte Zugmitteltriebe und zumindest einen Hubantrieb 49 umfasst. Die Zugmitteltriebe umfassen synchron angetriebene, endlos umlaufende Zugmittel 48a, 48b, welche jeweils um ein (oberes) Umlenkrad und ein mit dem Hubantrieb 49 gekuppeltes (unteres) Antriebsrad geführt sind. Das Zugmittel 48a, 48b ist beispielsweise durch einen Zahnriemen, eine Kette oder dgl. gebildet. Der Hubantrieb 63 ist bevorzugt durch einen Elektromotor, insbesondere einen Asynchronmotor, Synchronmotor und dgl., gebildet und am Führungsrahmen 36 gelagert. Durch Drehbewegung der Antriebsräder wird der Hubrahmen 37 und die auf diesem angeordnete Aufnahmevorrichtung 38 relativ zu den Regalebenen 11 in vertikaler Richtung (y-Richtung) bis zu einer von einem Rechnersystem festgelegten y-Position bewegt.

Die Aufnahmevorrichtung 38 umfasst parallel zur Regalgasse 8 (x-Richtung) mit gegenseitigem Abstand horizontal erstreckende Führungsschienen 50a, 50b, die auf dem über den Hubantrieb 38 vertikal verstellbaren Hubrahmen 37 befestigt sind und jeweils eine Höhenführungsbahn 51 und Seitenführungsbahn 52 ausbilden. Die Führungsschienen 50a, 50b sind beispielsweise U-Profile, C-Profile und dgl. gebildet. Das Förderfahrzeug 4 kann über die Antriebsräder 20 entlang der Höhenführungsbahnen 51 rollend bewegt werden. Zur Seitenführung des Förderfahrzeuges 4 dienen die oben beschriebenen Seitenführungsorgane 21, welche zwischen den Seitenführungsbahnen 52 der Fahrschienen positionierbar sind.

Wie aus dem oben Beschriebenen ersichtlich wird, bildet die Förderfahrzeug-Hebevorrichtung 6 mit dem Führungsrahmen 36, dem Hubrahmen 37, der Verstellvorrichtung für den Hubrahmen 37 und der heb- und senkbaren Aufnahmevorrichtung 38 für das Förderfahrzeug 4 eine eigenständige mechanische und elektrische Baueinheit, wie am besten aus Fig. 4 ersichtlich.

Die Aufnahmevorrichtung 38 kann zwischen den Regalebenen 11 auf das Höhenniveau einer jeden Regalebene 11 und auf das Höhenniveau einer Fördertechnikebene 53 verstellt werden, sodass Ladegüter 3 auch zwischen der Aufnahmevorrichtung 38 und einer zweiten Vorzonen-Fördertechnik gefördert werden können (Fig. 2).

Die zweite Vorzonen-Fördertechnik schließt an die Förderfahrzeug-Hebevorrichtung 6 an und umfasst eine erste Fördervorrichtung 54a und eine zweite Fördervorrichtung 54b, welche mit gegenseitigem Abstand parallel zueinander verlaufen. Die stationären Fördervorrichtungen 54a, 54b sind jeweils durch eine antreibbare Fördervorrichtung, beispielsweise einen Rollenförderer, Gurtförderer und dgl. gebildet. Hierbei werden über die erste Fördervorrichtung 54a Ladegüter 3 von der zweiten Vorzonen-Fördertechnik zur Förderfahrzeug-Hebevorrichtung 6 angefördert und über die zweite Fördervorrichtung 54b Ladegüter 3 von der Förderfahrzeug-Hebevorrichtung 6 zur zweiten Vorzonen-Fördertechnik abgefördert.

Durch die Anordnung der Ladegut-Hebevorrichtung 6 und/oder der Fördervorrichtungen 54a, 54b sind unterschiedliche Betriebsweisen des Regallagersystems 1 möglich.

Soll nach einer ersten Betriebsweise ein Ladegut 3 gemäß einem Kommissionierauftrag aus dem Regallager 2 ausgelagert werden, wird das Förderfahrzeug 4 vorerst durch die Aufnahmevorrichtung 38 auf das von einer Steuerung definierte Höhenniveau einer Regalebene 11 verbracht. Danach fährt das Förderfahrzeug 4 entlang der Führungsschienen 50a, 50b von der Aufnahmevorrichtung 38 in das Regallager 2 bis vor einen Stellplatz 12 in einer der Regalebenen 11. Dort angekommen, wird durch die Lastaufnahmevorrichtung 23 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsschienen 14a, 14b vom Regallager 2 auf die Aufnahmevorrichtung 38. Wurde das Förderfahrzeug 4 mit dem Ladegut 3 auf der Aufnahmevorrichtung 38 übernommen, wird das Förderfahrzeug 4 auf die von einer Steuerung definierte Fördertechnikebene 53 in die Übergabe- bzw. Übernahmestellung zwischen die Fördervorrichtungen 54a, 54b bewegt und das Ladegut 3 auf die Fördervorrichtung 54b übergeben. Zur Übergabe des Ladegutes 3 kann wiederum die Lastaufnahmevorrichtung 23 oder eine (nicht dargestellte) vom Förderfahrzeug 4 getrennte Entladevorrichtung, beispielsweise ein Schieber oder Riemenumsetzer, verwendet werden.

Nach einer zweiten Betriebsweise kann aber auch ein auf der Fördervorrichtung 54a bereitgestelltes Ladegut 3 in das Regallager 2 eingelagert werden, wozu das Förderfahrzeug 4 vorerst durch die Aufnahmevorrichtung 38 auf die von einer Steuerung definierte Fördertechnikebene 53 in die Übergabe- bzw. Übernahmestellung zwischen die Fördervorrichtungen 54a, 54b bewegt wird. Danach wird das Ladegut 3 von der Fördervorrichtung 54b auf das Förderfahrzeug 4 übernommen. Zur Übernahme des Ladegutes 3 kann wiederum die Lastaufnahmevorrichtung 23 oder eine (nicht dargestellte) vom Förderfahrzeug 4 getrennte Beladevorrichtung, beispielsweise ein Schieber oder Riemenumsetzer, verwendet werden. Wurde das Ladegut 3 auf das Förderfahrzeug 4 übernommen, wird das Förderfahrzeug 4 durch die Aufnahmevorrichtung 38 auf das von einer Steuerung definierte Höhenniveau einer Regalebene 11 verstellt. Danach fährt das Förderfahrzeug 4 entlang der Führungsschienen 50a, 50b von der Aufnahmevorrichtung 38 in das Regallager 2 bis vor einen freien Stellplatz 12 in einer der Regalebenen 11. Dort angekommen, wird durch die Lastaufnahmevorrichtung 23 das Ladegut 3 in das Lagerregal 7a, 7b auf einen vorderen oder hinteren Stellplatz 12 eingelagert.

Gemäß einer dritten Betriebsweise kann ein Ladegut 3 innerhalb des Regallagers 2, beispielsweise zum Zwecke der Lagerverdichtung von einem Stellplatz 12 in der ersten Regalebene 11 auf einen Stellplatz 12 in der vierten Regalebene 11 umgelagert werden. Dabei wird das Förderfahrzeug 4 vorerst auf die Aufnahmevorrichtung 38 übernommen und durch diese auf das von einer Steuerung definierte Höhenniveau der ersten Regalebene 11 verstellt. Danach fährt das Förderfahrzeug 4 entlang der Führungsschienen 50a, 50b von der Aufnahmevorrichtung 35 in das Regallager 2 bis vor den Stellplatz 12 in der ersten Regalebene 11. Dort angekommen, wird durch die Lastaufnahmevorrichtung 23 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsschienen 14a, 14b vom Regallager 2 auf die Aufnahmevorrichtung 38. Wurde das Förderfahrzeug 4 mit dem Ladegut 3 auf der Aufnahmevorrichtung 38 übernommen, wird das Förderfahrzeug 4 auf das von einer Steuerung definierte Höhenniveau der vierten Regalebene 11 verstellt. Danach fährt das Förderfahrzeug 4 entlang der Führungsschienen 50a, 50b von der Aufnahmevorrichtung 38 in das Regallager 2 bis vor den Stellplatz 12 in der vierten Regalebene 11. Dort angekommen, wird durch die Lastaufnahmevorrichtung 23 das Ladegut 3 vom Förderfahrzeug 4 in das Lagerregal 7a, 7b eingelagert.

Nach einer vierten Betriebsweise wird das Förderfahrzeug 4 ohne Ladegut 3 zwischen den Regalebenen 11 manipuliert. Dabei wird das Förderfahrzeug 4 vorerst auf die Aufnahmevorrichtung 38 übernommen und durch diese auf das von einer Steuerung definierte Höhenniveau der ersten Regalebene 11 verstellt. Danach fährt das Förderfahrzeug 4 entlang der Führungsschienen 50a, 50b von der Aufnahmevorrichtung 35 in die Regalgasse 8.

Die unterschiedlichen Betriebsweisen zeigen, dass das Regallagersystem 1 nur dann sehr effizient betrieben werden kann, wenn das zumindest eine Förderfahrzeug 4 nicht nur entlang der Lagerregale 7a, 7b, sondern auch auf der Umsetzbewegung zwischen den Führungsschienen 14a, 14b des Regallagers 2 und der Aufnahmevorrichtung 38 der Förderfahrzeug-Hebevorrichtung 6 mit hoher Fahrgeschwindigkeit bewegt werden kann.

Diese Anforderung kann nur erfüllt werden, wenn das Förderfahrzeug 4 auch im Umsetzbereich zwischen den (ortsfesten) Führungsschienen 14a, 14b des Regallagers 2 und den (vertikal beweglichen) Führungsschienen 50a, 50b der Aufnahmevorrichtung 38, letztere zur Umsetzbewegung des Förderfahrzeuges 4 auf ein entsprechendes Höhenniveau in der jeweiligen Regalebene 11 positioniert werden, mit hoher Genauigkeit und möglichst ruckfrei bewegt wird.

Hierzu ist es nun vorgesehen, dass die Führungsschienen 14a, 14b in jeder Regalebene 11 nicht nur mit den Regalstehern 55, 56, sondern auch mit ihren der Förderfahrzeug-Hebevorrichtung 6 benachbarten ersten Enden 57 bzw. Endabschnitten jeweils über zumindest ein Verbindungselement 58 mit den vertikalen Rahmenteilen 39a, 39b verbunden sind. Die Verbindungselemente 58 sind nach gezeigter Ausführung kraftschlüssige Verbindungselemente, beispielsweise Schrauben. Alternativ können die Verbindungselemente 58 auch durch stoffschlüssige Fügeverbindungen, beispielsweise Schweiß-, Löt- oder Klebeverbindungen, oder formschlüssige Verbindungselemente, beispielsweise Nietverbindungen, gebildet sein.

Die Führungsschienen 14a, 14b sind demnach über die Verbindungselemente 58 entweder lösbar oder dauerhaft mit dem formstabilen, verwindungssteifen Führungsrahmen 36 verbunden.

Die Führungsschienen 14a, 14b sind, wie beschrieben, in jeder Regalebene 11 mit ihren ersten Enden 57 bzw. Endabschnitten mit den vertikalen Regalstehern 55 und mit ihren zweiten Enden bzw. Endabschnitten mit den vertikalen Regalstehern 56 jeweils über zumindest ein Verbindungselement 59 verbunden. Die Verbindungselemente 59 sind nach gezeigter Ausführung kraftschlüssige Verbindungselemente, beispielsweise Schrauben. Alternativ können die Verbindungselemente 59 auch durch stoffschlüssige Fügeverbindungen, beispielsweise Schweiß-, Löt- oder Klebeverbindungen, oder formschlüssige Verbindungselemente, beispielsweise Nietverbindungen, gebildet sein.

Die Führungsschienen 14a, 14b sind demnach über die Verbindungselemente 59 entweder lösbar oder dauerhaft mit den Regalstehern 55, 56 verbunden.

Die Verbindung des Führungsrahmens 36 im Bereich einer jeden Regalebene 11 an den Führungsschienen 14a, 14b hat außerdem den Vorteil, dass die vertikalen Rahmenteile 39a, 39b und Traversen 40a, 40b selbst bei geringer Wandstärke hohe Gewichtskräfte am Hubrahmen 37 bzw. an der Aufnahmevorrichtung 38 aufnehmen kann, ohne dabei übermäßige Durchbiegungen an den Rahmenteilen 39a, 39b zu bewirken. Dadurch wird eine hohe Führungsgenauigkeit des Hubrahmens 37 am Führungsrahmen 36 und damit wiederum auch bei hoher Fahrgeschwindigkeit des Förderfahrzeuges 4 eine "sanfte" Umsetzbewegung bei der Überfahrt des Förderfahrzeuges 4 zwischen dem Regallager 2 und der Förderfahrzeug-Hebevorrichtung 6 erreicht. Eine steigende Anzahl an Regalebenen 11 führt zu einer zunehmenden Verlängerung der Rahmenteile 39a, 39b. So ist es üblich, dass ein Regallager bis zu einer Höhe von 30 Meter ausgebildet sein kann und dementsprechend auch die Länge der vertikalen Rahmenteile 39a, 39b variieren kann. Durch die bauliche Maßnahme, wie beschrieben, kann nun auch bei sehr hohen Regallagern bzw. Führungsrahmen das Gesamtgewicht der Förderfahrzeug-Hebevorrichtung 6 erheblich reduziert werden.

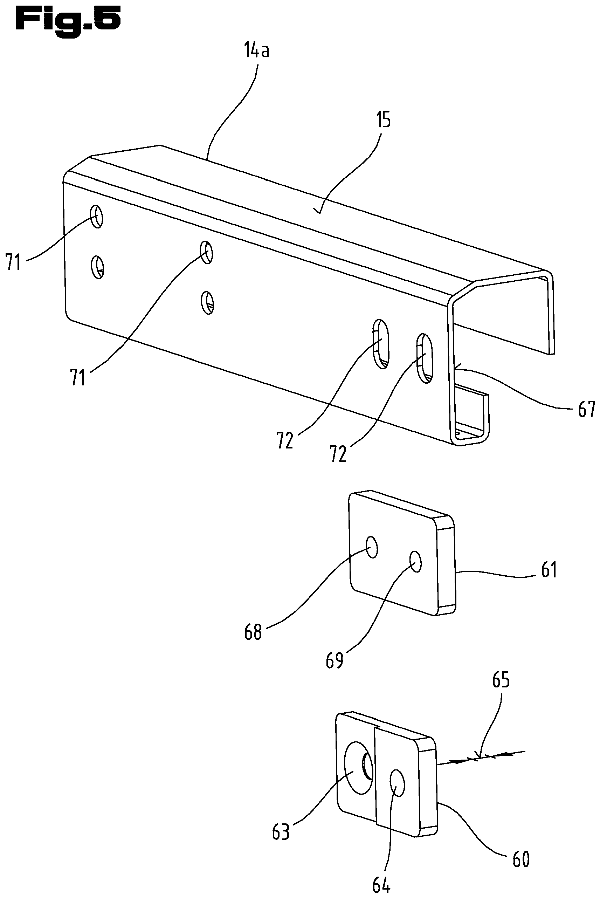

In Fig. 5 ist eine Führungsschiene 14a und eine Montagevorrichtung für die Führungsschiene 14a am Rahmenteil 39a gezeigt. Die Montagevorrichtung kann eine Distanzplatte 60 und optional auch eine Montageplatte 61 umfassen. Die Distanzplatte 60 wird in den Montagebereichen 62 in der jeweiligen Regalebene 11, wie in Fig. 6 dargestellt, zwischen der Führungsschiene 14a, 14b und dem Rahmenprofil 39a, 39b angeordnet. Zur Befestigung der Distanzplatte 60 an der Führungsschiene 14a ist eine Durchgangsöffnung 63 vorgesehen. Eine Durchgangsöffnung 64 dient zur Anordnung des Verbindungselementes 58. Die minimale Wandstärke 65 der Distanzplatte 60 ist so gewählt, dass auf der Hubbewegung der Aufnahmevorrichtung 38 zwischen den Führungsschienen 50a, 50b und den Rahmenteilen 39a, 39b jeweils ein Abstandsspalt 66 ausgebildet ist. Dadurch kann auch bei einer geringfügigen Schiefstellung des Hubrahmens 37 gegenüber einer Horizontalebene und damit verbundene Durchbiegung der Rahmenteilen 39a, 39b eine Kollision zwischen dem Führungsrahmen 32 und dem Hubrahmen 37 vermieden werden.

Ist auch eine Montageplatte 61 vorgesehen, wird ein optimierter Kraftfluss im Montagebereichen 62 zwischen der Führungsschiene 14a, 14b und dem Rahmenprofil 39a, 39b erreicht. Die Montageplatte 61 wird in den Montagebereichen 62 in der jeweiligen Regalebene 11, wie in den Fig. 5 und Fig. 6 dargestellt, gegen eine Innenseite 67 der Führungsschiene 14a, 14b angelegt. Zur Befestigung der Montageplatte 61 an der Führungsschiene 14a ist eine Durchgangsöffnung 68 vorgesehen. Eine Durchgangsöffnung 69 dient zur Anordnung des Verbindungselementes 58.

Die Distanzplatte 60 und gegebenenfalls Montageplatte 61 sind über Verbindungselemente 70 mit der Führungsschiene 14a, 14b verbunden. Die Verbindungselemente 70 sind nach gezeigter Ausführung kraftschlüssige Verbindungselemente, beispielsweise Schrauben. Alternativ können die Verbindungselemente 70 auch durch stoffschlüssige Fügeverbindungen, beispielsweise Schweiß-, Löt- oder Klebeverbindungen, oder formschlüssige Verbindungselemente, beispielsweise Nietverbindungen, gebildet sein.

Wie in Fig. 5 auch ersichtlich, ist die Führungsschiene 14a, 14b zur Befestigung am vertikalen Regalsteher 55 mit Durchgangsöffnungen 71 versehen. Die Durchgangsöffnungen 71 sind vorzugsweise zylindrische Bohrungen. Sind die Verbindungselemente 59 kraftschlüssige oder formschlüssige Verbindungselemente, werden diese durch die Durchgangsöffnungen 71 hindurchgeführt.

Die Durchgangsöffnung(en) 72 sind vorzugsweise Langlochausnehmungen, deren Längsachse senkrecht zur Höhenführungsbahn 15 (y-Richtung) verläuft. Dadurch können die Führungsschienen 14a, 14b in vertikaler Richtung relativ zu den Rahmenteilen 39a, 39b und in der jeweiligen Regalebene 11 relativ zueinander positioniert werden, sodass die Höhenführungsbahnen 15 exakt in einer Horizontalebene verlaufen. Ist die Längsachse der Langlochausnehmungen schräg zur Höhenführungsbahn 15 ausgerichtet und schließt die Längsachse und die Höhenführungsbahn 15 einen von 90° zur Höhenführungsbahn 15 abweichenden Winkel ein, können die Führungsschienen 14a, 14b in vertikaler und horizontaler Richtung relativ zu den Rahmenteilen 39a, 39b und in der jeweiligen Regalebene 11 relativ zueinander positioniert werden, sodass die Höhenführungsbahnen 15 exakt in einer Horizontalebene und die Stirnkanten 73 der Führungsschienen 14a, 14b mit ausreichend hoher Genauigkeit in einer Vertikalebene verlaufen. Sind die Verbindungselemente 58, 70 kraftschlüssige oder formschlüssige Verbindungselemente, werden diese durch die Durchgangsöffnungen 72 hindurchgeführt. Wie in der Fig. 5 auch ersichtlich, verlaufen die Stirnkanten 73 der Führungsschienen 14a, 14b, 50a, 50b jeweils in einer zu deren Längserstreckung senkrechten Ebene.

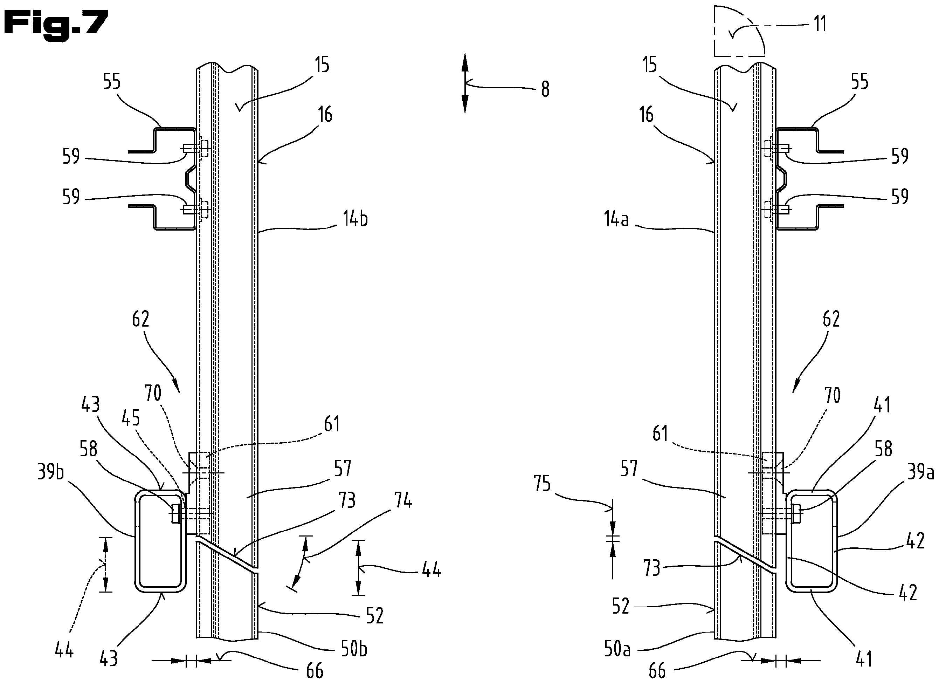

Es ist aber auch möglich, dass die Stirnkanten 73 der Führungsschienen 14a, 14b, 50a, 50b jeweils zumindest über eine Teilbreite oder die Gesamtbreite schräg zur Längserstreckung der Führungsschienen 14a, 14b, 50a, 50b verlaufen und einen Winkel 74 einschließen, wie in Fig. 7 gezeigt. Der Winkel 74 kann zwischen 30° und 45° betragen. Durch diese Maßnahme kann unter Einhaltung eines Abstandsspaltes 75 zwischen den einander zugewandten Stirnkanten 73 der Führungsschienen 50a, 50b der Aufnahmevorrichtung 38 und der Führungsschienen 14a, 14b des Regallagers 2 von wenigen Millimetern die Überfahrt des Förderfahrzeuges 4 über den Abstandsspalt 75 zwischen der Aufnahmevorrichtung 38 und der Regalgasse 2 noch sanfter erfolgen, als bei dem in Fig. 6 gezeigten Abstandsspalt 75 zwischen den rechtwinkeligen Stirnkanten 73, bzw. kann die Fahrgeschwindigkeit des Förderfahrzeuges 4 weiter angehoben werden.

Die Ausführungsbeispiele zeigen mögliche Ausführungsvarianten des Regallagersystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Regallagersystems 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Regallagersystem | 41 | Profilwand |
| 2 | Regallager | 42 | Profilwand |
| 3 | Ladegut | 43 | Führungsbahn |
| 4 | Förderfahrzeug | 44 | Führungsbahn |
| 5 | Ladegut-Hebevorrichtung | 45 | Befestigungsmittel |
| | | | |
| 6 | Förderfahrzeug-Hebevorrichtung | 46 | Aufnahmegestell |
| 7 | Lagerregal | 47 | Führungsorgan |
| 8 | Regalgasse | 48 | Zugmittel |
| 9 | Regallagerseite | 49 | Hubantrieb |
| 10 | Regallagerseite | 50 | Führungsschiene |
| | | | |
| 11 | Regalebene | 51 | Höhenführungsbahn |
| 12 | Stellplatz | 52 | Seitenführungsbahn |
| 13 | Pufferplatz | 53 | Fördertechnikebene |
| 14 | Führungsschiene | 54 | Fördervorrichtung |
| 15 | Höhenführungsbahn | 55 | Regalsteher |
| | | | |
| 16 | Seitenführungsbahn | 56 | Regalsteher |
| 17 | Führungsschiene | 57 | Ende |
| 18 | Höhenführungsbahn | 58 | Verbindungselement |
| 19 | Seitenführungsbahn | 59 | Verbindungselement |
| 20 | Antriebsrad | 60 | Distanzplatte |
| | | | |
| 21 | Seitenführungsorgan | 61 | Montageplatte |
| 22 | Gehäuserahmen | 62 | Montagebereich |
| 23 | Lastaufnahmevorrichtung | 63 | Durchgangsöffnung |
| 24 | Teleskoparm | 64 | Durchgangsöffnung |
| 25 | Mitnehmer | 65 | Wandstärke |
| | | | |
| 26 | Feststellvorrichtung | 66 | Abstandsspalt |
| 27 | Aufnahmevorrichtung | 67 | Innenseite |
| 28 | Transportvorrichtung | 68 | Durchgangsöffnung |
| 29 | Hubantrieb | 69 | Durchgangsöffnung |
| 30 | Hubrahmen | 70 | Verbindungselement |
| | | | |
| 31 | Mast | 71 | Durchgangsöffnung |
| 32 | Führung | 72 | Durchgangsöffnung |
| 33 | Führungsrad | 73 | Stirnkante |
| 34 | Fördertechnikebene | 74 | Winkel |
| 35 | Fördervorrichtung | 75 | Abstandsspalt |
| | | | |
| 36 | Führungsrahmen | | |
| 37 | Hubrahmen | | |
| 38 | Aufnahmevorrichtung | | |
| 39 | Rahmenteil | | |
| 40 | Traverse | | |

## Patentansprüche

1. Regallagersystem (1) mit einem Regallager (2) mit benachbart zueinander angeordneten Lagerregalen (7a, 7b), zwischen denen sich zumindest eine Regalgasse (8) von einer ersten Regallagerseite (9) zu einer zweiten Regallagerseite (10) erstreckt und welche in übereinander liegenden Regalebenen (11) Stellplätze (12) für Ladegüter (3) aufweisen, und jeweils in den Regalebenen (11) entlang der Regalgasse (8) parallel zueinander verlaufenden Führungsschienen (14a, 14b) und zumindest einem entlang der Führungsschienen (14a, 14b) verfahrbaren, autonomen Förderfahrzeug (4) zum Transport der Ladegüter (3) zu den Stellplätzen (12) und einer auf mindestens einer der Regallagerseiten (9, 10) angeordneten Förderfahrzeug-Hebevorrichtung (6) zum Transport des Förderfahrzeuges (4) zumindest zwischen den Regalebenen (11), welche Förderfahrzeug-Hebevorrichtung (6) eine eigenständige mechanische und elektrische Baueinheit bildet und einen sich zumindest zwischen der untersten Regalebene (11) und obersten Regalebene (11) erstreckenden Führungsrahmen (36) und eine an diesem relativ zu den Lagerregalen (7a, 7b) vertikal bewegbare Aufnahmevorrichtung (38) für das Förderfahrzeug (4) umfasst, wobei die Aufnahmevorrichtung (38) über einen Hubrahmen (37) mit Führungsorganen (47a, 47b) am Führungsrahmen (36) gelagert ist und in einer Richtung parallel zur Regalgasse (8) verlaufende Führungsschienen (50a, 50b) umfasst, wobei die Förderfahrzeug-Hebevorrichtung (6) derart der Regalgasse (8) vorgelagert ist, dass die Führungsschienen (50a, 50b) der Aufnahmevorrichtung (38) in der Verlängerung zu den Führungsschienen (14a , 14b) der Regalgasse (8) verlaufen, wenn die Aufnahmevorrichtung (38) in der jeweiligen Regalebene (11) vor der Regalgasse (8) positioniert wird,
**dadurch gekennzeichnet, dass** die Förderfahrzeug-Hebevorrichtung (6) mit dem Führungsrahmen (36) über Verbindungselemente (58) in zumindest einigen der Regalebenen (11), bevorzugt in jeder Regalebene (11) mit den sich entlang der Regalgasse (8) erstreckenden Führungsschienen (14a, 14b) verbunden ist.

2. Regallagersystem nach Anspruch 1, **dadurch gekennzeichnet, dass** der Führungsrahmen (36) vertikale Rahmenteile (39a, 39b) umfasst, welche beidseitig seitlich zur Regalgasse (8) angeordnet sind.

3. Regallagersystem nach Anspruch 1 oder 2, **dadurch gekennzeichnet, dass** der Führungsrahmen (36) vertikale Rahmenteile (39a, 39b), eine diese am unteren Ende miteinander verbindende untere Traverse (40a) und eine diese am oberen Ende miteinander verbindende obere Traverse (40b) umfasst.

4. Regallagersystem nach einem der Ansprüche 2 bis 3, **dadurch gekennzeichnet,**
**dass** die vertikalen Rahmenteile (39a, 39b) jeweils Führungsbahnen (43, 44) für die Führungsorgane (47a, 47b) des Hubrahmens (37) ausbilden.

5. Regallagersystem nach einem der Ansprüche 2 bis 4, **dadurch gekennzeichnet,**
**dass** die vertikalen Rahmenteile (39a, 39b) jeweils getrennt von den Führungsbahnen (43, 44) in einem Rasterabstand angeordnete Befestigungsmittel (45) zur Montage der Führungsschienen (14a, 14b) ausbilden.

6. Regallagersystem nach einem der Ansprüche 2 bis 5, **dadurch gekennzeichnet,**
**dass** die Führungsschienen (14a, 14b) zusätzlich jeweils mit Regalstehern (55) und mit ihren der Förderfahrzeug-Hebevorrichtung (6) benachbarten Enden (57) mit den vertikalen Rahmenteilen (39a, 39b) verbunden sind.

7. Regallagersystem nach einem der Ansprüche 2 bis 6, **dadurch gekennzeichnet,**
**dass** in Montagebereichen (62) jeweils zwischen den vertikalen Rahmenteilen (39a, 39b) und den Führungsschienen (14a, 14b) jeweils eine Distanzplatte (60) angeordnet ist.

8. Regallagersystem nach einem der Ansprüche 2 bis 7, **dadurch gekennzeichnet,**
**dass** in den Montagebereichen (62) jeweils zwischen den vertikalen Rahmenteilen (39a, 39b) und den Führungsschienen (14a, 14b) zur Befestigung der Führungsschienen (14a, 14b) an den Rahmenteilen (39a, 39b) jeweils eine Montageplatte (61) vorgesehen ist.

## Claims

1. Rack store system (1) having a rack store (2) with storage racks (7a,7b) which are arranged adjacently to one another, between which at least one rack aisle (8) extends from a first rack store side (9) to a second rack store side (10) and which have storing positions (12) for freight (3) in rack levels (11) which lie one above another, and having guide rails (14a, 14b) which extend in each case parallel to one another along the rack aisle (8) in the rack levels (11), and having at least one autonomous conveyor vehicle (4) which can be moved along the guide rails (14a, 14b) in order to transport the freight (3) to the storing positions (12), and having a conveyor-vehicle lifting device (6) which is arranged on at least one of the rack store sides (9, 10) for transporting the conveyor vehicle (4) at least between the rack levels (11), which conveyor-vehicle lifting device (6) forms a stand-alone mechanical and electrical module and comprises a guide frame (36), which extends at least between the lowermost rack level (11) and the uppermost rack level (11), and a receiving device (38) for the conveyor vehicle (4), which receiving device can be moved vertically on said guide frame relative to the storage racks (7a,7b), wherein the receiving device (38) is mounted on the guide frame (36) via a lifting frame (37) with guide elements (47a, 47b) and comprises guide rails (50a, 50b) which extend in a direction parallel to the rack aisle (8), wherein the conveyor-vehicle lifting device (6) is mounted in front of the rack aisle (8) in such a way that the guide rails (50a, 50b) of the receiving device (38) extend in the continuation of the guide rails (14a,14b) of the rack aisle (8) when the receiving device (38) is positioned in the respective rack level (11) in front of the rack aisle (8),
**characterized in that**
the conveyor-vehicle lifting device (6) with the guide frame (36) is connected via connecting elements (58) in at least some of the rack levels (11), preferably in every rack level (11), to the guide rails (14a, 14b) which extend along the rack aisle (8).

2. Rack store system according to claim 1, **characterized in that** the guide frame (36) comprises vertical frame parts (39a,39b), which are arranged laterally on both sides of the rack aisle (8).

3. Rack store system according to claim 1 or 2, **characterized in that** the guide frame (36) comprises vertical frame parts (39a, 39b), a lower cross-bar (40a) connecting these together at the lower end and an upper cross-bar (40b) connecting these together at the upper end.

4. Rack store system according to any one of claims 2 to 3, **characterized in that** the vertical frame parts (39a,39b) each form guide paths (43, 44) for the guide elements (47a, 47b) of the lifting frame (37).

5. Rack store system according to any one of claims 2 to 4, **characterized in that** the vertical frame parts (39a,39b), in each case separately from the guide paths (43, 44), form fixing means (45), arranged at a raster pitch, for mounting the guide rails (14a, 14b).

6. Rack store system according to any one of claims 2 to 5, **characterized in that** the guide rails (14a, 14b) are additionally connected to the vertical frame parts (39a, 39b), in each case with shelf supports (55) and with their ends (57) adjacent to the conveyor-vehicle lifting device (6).

7. Rack store system according to any one of claims 2 to 6, **characterized in that** in mounting areas (62), a spacing plate (60) is arranged in each case between the vertical frame parts (39a, 39b) and the guide rails (14a, 14b).

8. Rack store system according to any one of claims 2 to 7, **characterized in that** in the mounting areas (62), a mounting plate (61) is provided in each case between the vertical frame parts (39a, 39b) and the guide rails (14a, 14b), for fixing the guide rails (14a, 14b) to the frame parts (39a, 39b).

## Revendications

1. Système de rayonnages (1) avec un rayonnage (2) avec des étagères de stockage (7a, 7b) disposées les unes à côté des autres, entre lesquelles s'étend une allée de rayonnages (8), d'un premier côté de rayonnage (9) et un deuxième côté de rayonnage (10) et qui comprennent, dans des plans de rayonnages (11) superposés, des emplacements (12) pour des marchandises (3) et, dans les plans de rayonnages (11) le long de l'allée de rayonnages (8), des rails de guidage (14a, 14b) parallèles entre eux et au moins un véhicule de transport (4) autonome, mobile le long des rails de guidage (14a, 14b), pour le transport des marchandises (3) vers les emplacements (12) et un dispositif de levage de véhicule de transport (6), disposé sur au moins un des côtés du rayonnage (9, 10), pour le transport du véhicule de transport (4) au moins entre les plans de rayonnages (11), ce dispositif de levage de véhicule de transport (6) constituant un sous-ensemble mécanique et électrique autonome et comprenant un cadre de guidage (36) s'étendant au moins entre le plan de rayonnage (11) le plus bas et le plan de rayonnage (11) le plus haut et un dispositif de logement (38) mobile verticalement le long de celui-ci par rapport aux étagères de stockage (7a, 7b), pour le véhicule de transport (4), le dispositif de logement (38) étant logé sur le cadre de guidage (36) par l'intermédiaire d'un cadre de levage (37) avec des organes de guidage (47a, 47b) et comprenant des rails de guidage (50a, 50b) s'étendant parallèlement à l'allée de rayonnages (8), le dispositif de levage de véhicule de transport (6) étant disposé en amont de l'allée de rayonnages (8) de façon à ce que les rails de guidage (50a, 50b) du dispositif de logement (38) s'étendent dans le prolongement des rails de guidage (14a, 14b) de l'allée de rayonnages (8), lorsque le dispositif de logement (38) est positionné dans le plan de rayonnage (11) correspondant devant l'allée de rayonnages (8),
**caractérisé en ce que** le dispositif de levage de véhicule de transport (6) est relié avec le cadre de guidage (36) par l'intermédiaire d'éléments de liaison (58) dans au moins certains des plans de rayonnages (11), de préférence dans chaque plan de rayonnage (11), avec les rails de guidage (14a, 14b) s'étendant le long de l'allée de rayonnages (8).

2. Système de rayonnages selon la revendication 1, **caractérisé en ce que** le cadre de guidage (36) comprend des parties de cadre verticales (39a, 39b) qui sont disposées des deux côtés de l'allée de rayonnages (8).

3. Système de rayonnages selon la revendication 1 ou 2, **caractérisé en ce que** le cadre de guidage (36) comprend des parties de cadre verticales (39a, 39b), une traverse inférieure (40a) reliant celles-ci entre elles au niveau de l'extrémité inférieure et une traverse supérieure (40b) reliant celles-ci entre elles au niveau de l'extrémité supérieure.

4. Système de rayonnages selon l'une des revendications 2 à 3, **caractérisé en ce que** les parties de cadre verticales (39a, 39b) constituent chacune des pistes de guidages (43, 44) pour les organes de guidage (47a, 47b) du cadre de levage (37).

5. Système de rayonnages selon l'une des revendications 2 à 4, **caractérisé en ce que** les parties de cadre verticales (39a, 39b) constituent chacune des moyens de fixation (45) disposés séparément des pistes de guidage (43, 44) avec une distance de trame, pour le montage des rails de guidage (14a, 14b).

6. Système de rayonnages selon l'une des revendications 2 à 5, **caractérisé en ce que** les rails de guidage (14a, 14b) sont en outre reliés chacun avec des montants de rayonnages (55) et, avec leurs extrémités (57) adjacentes au dispositif de levage de véhicule de transport (6), avec les parties de cadre verticales (39a, 39b).

7. Système de rayonnages selon l'une des revendications 2 à 6, **caractérisé en ce que**, dans chacune des zones de montage (62), se trouve, entre les parties de cadre verticales (39a, 39b) et les rails de guidage (14a, 14b), une plaque d'écartement (60).

8. Système de rayonnages selon l'une des revendications 2 à 7, **caractérisé en ce que**, dans chacune des zones de montage (62), se trouve, entre les parties de cadre verticales (39a, 39b) et les rails de guidage (14a, 14b), pour la fixation des rails de guidage (14a, 14b) sur les parties de cadre (39a, 39b), une plaque de montage (61).
